# EUROPEAN PATENT SPECIFICATION

(11) **EP 3 260 819 B1**
(45) Date of publication and mention of the grant of the patent: **17.10.2018**
(21) Application number: 16461529.6
(22) Date of filing: 23.06.2016
(51) Int. Cl.: G01D 4/00, G01F 15/06, F16B 21/06, F16B 41/00

(54) **EXTENSION FOR WATER METER**
ERWEITERUNG FÜR WASSERZÄHLER
EXTENSION DE COMPTEUR D'EAU

(43) Date of publication of application: 27.12.2017
(73) Proprietor: Aiut Sp. z o.o., 44-109 Gliwice (PL)
(72) Inventor: GABRYS, Marek, 44-100 Gliwice (PL)
(74) Representative: AOMB Polska Sp. z.o.o.

(56) References cited:
- EP-B1- 1 571 428
- EP-B1- 2 079 991
- EP-B1- 2 311 672
- JP-U- S5 160 902
- US-A1- 2009 014 679

## Description

The object of the invention is an extension for water meter. More particularly, the invention relates to an extension with a housing with a hooking means, allowing stable mounting on the water meter, as well as a body part adapted to mount an electronic transmission system.

Water meters are primary devices for measurement of water consumption. Various housing structures for these device are known.

For example, international application published under number WO2012025340A1 disclosing a meter of complex shape, the cover of which is connected to the housing via latches 5 engaging in the recesses 6, can be found in the prior art.

In turn, Polish Patent Application No. PL397469 shows a structure of the water meter in which a meter cover is connected to a housing by means of a hinge, and it is blocked, in its closed position, by a cylindrical bar connected to the cover which is grasped by a hook-shaped projection integral with the housing.

Another solution is presented in U.S. Patent US8632039B2, wherein a cover protecting the meter consists of two parts. The first one is connected by a screw to an annular clamp which secures a wireless communication module to the meter and thereby covers sides of the water meter, while the other one has the form of a flap covering the top of the water meter, the flap being mounted to the first one by a releasable latch which allows a hinged rotation.

EP 2079991 B1 discloses an extension for a water meter comprising a cam-based locking mechanism.

Currently, reading of consumption, performed by a man (a collector), is considered to be outdated and inconvenient - it requires the man to physically visit the location of the water meter, to read the consumption and to introduce the reading to an appropriate system, e.g. operator's billing system. A convenient alternative is telemetry, i.e. equipping the meter with a communication module, usually for wireless communication, wherein the said module allows reading of consumption on a particular meter (e.g. water meter), and then sending the data via a radio network (preferably wirelessly) to the server. The server places the data in a properly configured system which, depending on the needs, can not only issue invoices but also e.g. monitor current consumption and alert about leaks (uncontrolled, continuous leakage).

Electronic meters (in particular including: water meters) are equipped with a telemetric module integrated in a single housing with the meter. A properly designed housing should prevent unwanted interference from outside (e.g. in order to stop, cheat or circumvent the meter), and at the same time allow such interference by an entitled person (e.g. in order to check or repair the meter).

Mechanical water meters which do not have any telemetric module are used and manufactured. In this case, the only alternative to the previously discussed reading during inspection visits is to equip the water meter with a special extension containing a telemetric module. However, such an extension - similarly to the housing of the meter itself - must be mounted on the meter so as to prevent undesirable interference from outside (e.g. in order to stop, cheat or disassemble the extension), and at the same time to allow such interference by an entitled person (e.g. in order to check or repair the extension).

The object of the present invention is to provide an extension for a specific, known, commercially available line of water meters produced by Diehl - more specifically it relates to water meters of modular range, Mirometr-Sapel, having a gray housing (or red one for hot water) marked Ha+Ti or Ti. For example, these are commercially available devices under the name: Altair and Aquarius. The extension according to the present invention allows remote reading, and its structure, shape, and in particular the mounting means used satisfy the above requirements.

The object of the invention is an extension for water meter, characterised in that it comprises an upper body with a place reserved for an electronic teletransmission system and a lower body having its shape adapted to the upper part of the water meter housing, equipped with a mounting means for mounting the extension to the water meter, wherein the mounting means includes at least one rigid hook and at least one hooking unit comprising a flexible hook, a hook clamp and a screw positioned relative to each other so that, after placing the extension on the water meter, the flexible hook falls into a hooking window of the water meter, and is blocked in this position by the hook clamp tightened with the screw.

Preferably, the extension comprises exactly one rigid hook and exactly two hooking units, arranged circumferentially in the lower body of the extension.

Preferably, the hooking unit, as seen from inside in the radial direction outwards, comprises, in order:
a. the flexible hook, located closest to the centre of the extension, mounted with its one end to the lower body and extending from that place downwards, i.e. towards the water meter, and equipped with the latch, located below this place, preferably at the opposite end of the flexible hook,
b. the hook clamp, located further from the centre of the extension than the flexible hook, mounted with its one end to the lower body and extending from that place downwards, i.e. towards the water meter, and equipped with a projection directed towards the flexible hook, located below this place, preferably at the opposite end of the hook clamp,
c. a hole for the screw, located further from the centre of the extension than the hook clamp, extending substantially in parallel to the hook clamp, having location and dimensions selected so that, after placing the extension on the water meter and screwing the screw into this hole - the screw pushes the hooking unit and, through the projection of the hook clamp, it presses the clamp of the flexible hook, thereby stabilising the clamp of the flexible hook in the hooking window of the water meter.

Preferably, the hooking unit is placed in a recess in the lower body of the extension.

Preferably, the screw is covered with a cap from above.

Preferably, the extension further includes an electronic teletransmission system, arranged in a place reserved therefor in the upper body.

Preferably, the electronic teletransmission system includes an antenna, a battery and a PCB with appropriately configured and programmed electronic components.

Preferably the extension is made of a plastic material, preferably copolymer of acrylonitrile-butadiene-styrene (ABS), polyamide (PA) or polycarbonate (PC).

The invention will be now presented in greater detail in a preferred embodiment, with reference to the accompanying drawings in which:
- Fig. 1: shows a general view of the extension on the water meter according to the invention, including a lower body 2 designed to be mounted to an upper part of the water meter housing, equipped with a mounting means 2a, 2b, 2c, and an upper body 1 constituting a housing for a transmission system for data transmission by radio, comprising, among others, an antenna 5, a battery 6, and a PCB with appropriately configured and programmed electronic components;
- Fig. 2: (prior art) shows the upper part of the housing of the water meter 10, comprising three hooking windows 10a used for mounting the hooks of the water meter 10,
- Fig. 3: shows a) a side view, b) a top view and c) a bottom view of the extension according to the invention;
- Fig. 4: shows an assembly drawing of the extension according to the invention;

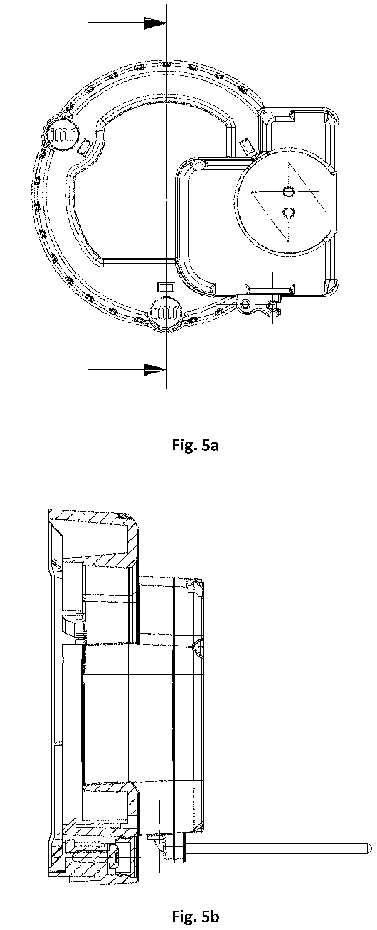

- Fig. 5: shows a cross section of the extension according to the invention (b) with a plane indicated in the drawing (a)

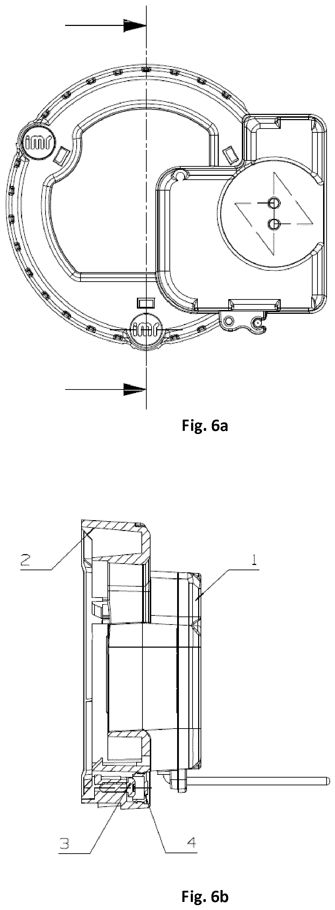

- Fig. 6: shows a cross section of the extension according to the invention (b) with a plane indicated in the drawing (a), and
- Fig. 7: shows a cross section of the extension according to the invention (b) with plane B-B indicated in the drawing (a), as well as detail C (c) and a cross section of the extension according to the invention (d) with plane D-D indicated in the drawing (a), and also detail E (e).

References in the drawings: 1 - upper body of the extension, 2 - lower body of the extension, 2a - flexible hook in the lower body, 2b - hook clamp in the lower body, 2c - rigid hook in the lower body, 3 - screw, 4 - cap, 5 - antenna, 6 - battery, 7 - PCB, 10 - water meter (counter, meter), 10a - hooking window in the water meter (counter, meter).

### Preferred Embodiment of the Invention

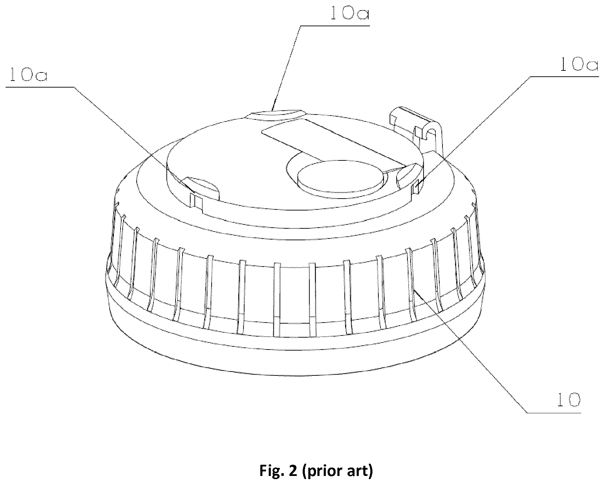

Water meter of modular range Mirometr-Sapel 10, the upper part of the housing of which is shown in Fig. 2 (prior art) is a known, commercially available product. This part of the housing of the water meter 10 has three hooking windows 10a arranged, as shown in the drawing. The hooking windows 10a are in the form of cavities or recesses in the housing of the water meter 10. The presented embodiment of the invention is suitable not only for use in the above-mentioned water meter model - but also for the whole, known, commercially available line of water meters produced by Diehl - more specifically it relates to water meters of modular range, Mirometr-Sapel, having a gray housing (or red one for hot water) marked Ha+Ti or Ti.

The extension according to the invention is designed and adapted to be mounted to such a water meter.

It has an upper body 1 with a place reserved for an electronic teletransmission system and a lower body 2 having its shape adapted to the upper part of the water meter housing, equipped with a mounting means (2a, 2b, 2c, 3) for mounting the extension to the water meter 10. The mounting means includes at least one rigid hook 2c and at least one hooking unit comprising a flexible hook 2a, a hook clamp 2b and a screw 3.

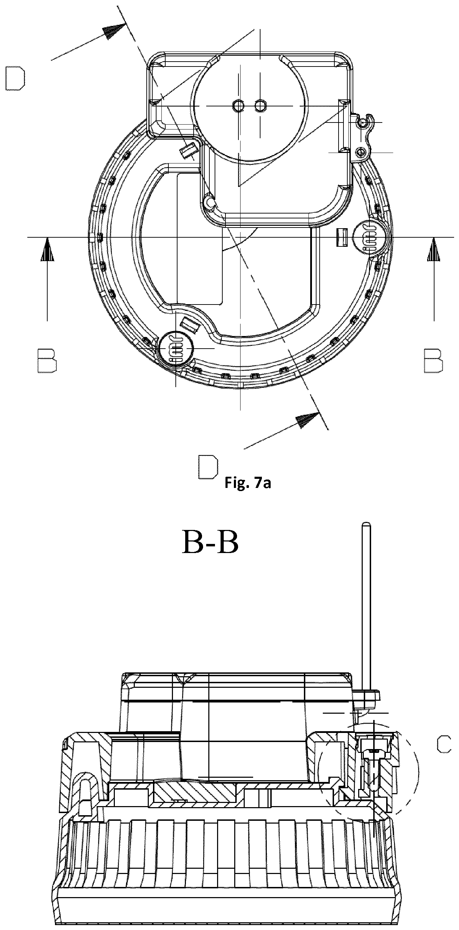

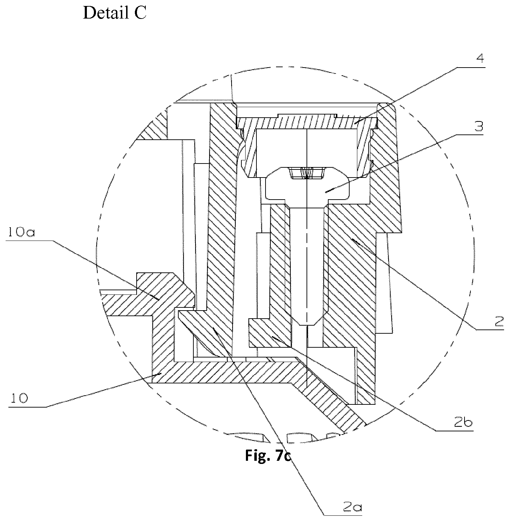

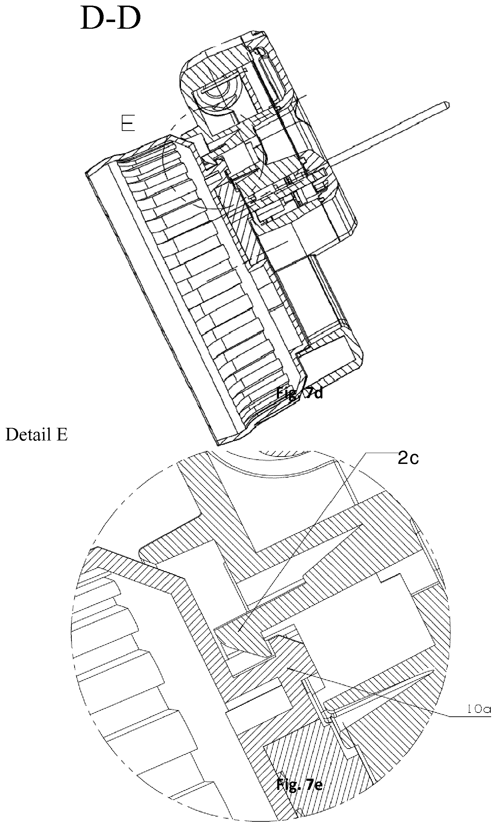

After proper placement of the extension on the water meter 10, the flexible hook 2c falls into one of the hooking windows 10a of the water meter 10, as shown in detail in Fig. 7e. In turn, in the mentioned hooking unit comprising the flexible hook 2a, the hook clamp 2b and the screw 3, these elements are positioned relative to each other so that, after placing the extension on the water meter 10, the flexible hook 2a falls into a hooking window 10a of the water meter 10, and is blocked in this position by the hook clamp 2b tightened with the screw 3. This is shown in detail in Fig. 7c. In this drawing, the following structure of the hooking unit is shown: as seen from the inside of the extension in the radial direction outwards, the hooking unit comprises, in order:
a. the flexible hook 2a, located closest to the centre of the extension, mounted with its one end to the lower body 2 and extending from that place downwards, i.e. towards the water meter 10, and equipped with the latch, located below this place, preferably at the opposite end of the flexible hook 2a,
b. the hook clamp 2b, located further from the centre of the extension than the flexible hook 2a, mounted with its one end to the lower body 2 and extending from that place downwards, i.e. towards the water meter 10, and equipped with a projection directed towards the flexible hook 2a, located below this place, preferably at the opposite end of the hook clamp 2b,
c. a hole for the screw 3, located further from the centre of the extension than the hook clamp 2b, extending substantially in parallel to the hook clamp 2b, having location and dimensions selected so that, after proper placement of the extension on the water meter 10 and screwing the screw 3 into this hole - the screw 3 pushes the hooking unit and, through the projection of the hook clamp 2b, it presses the clamp of the flexible hook 2a, thereby stabilising the clamp of the flexible hook 2a in the hooking window 10a of the water meter 10.

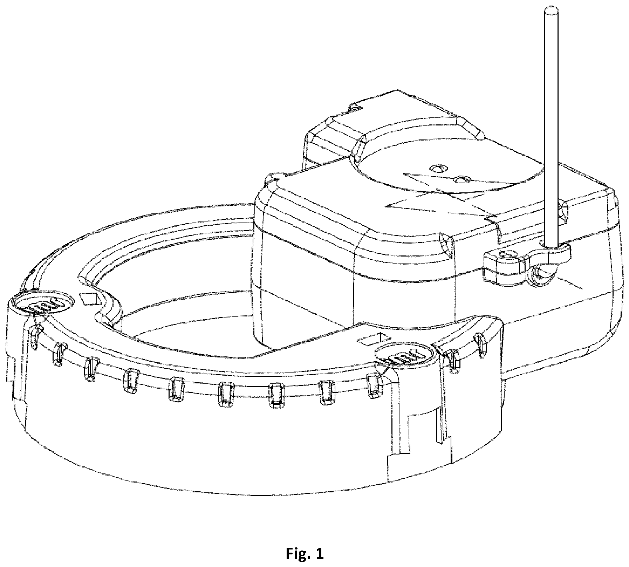

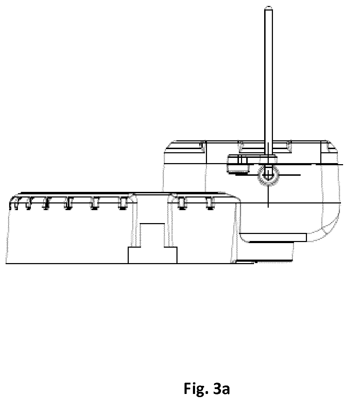

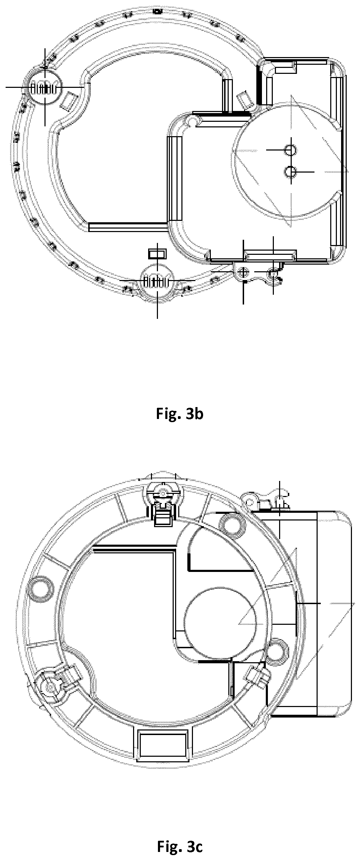

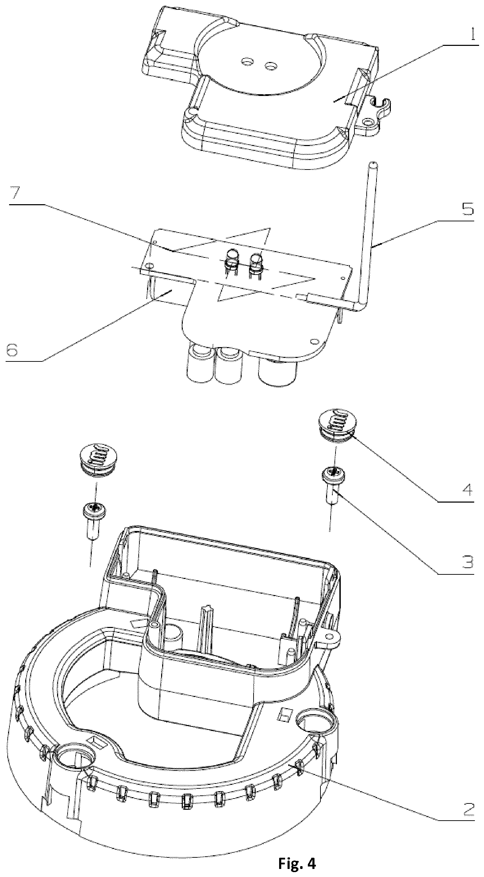

In the presented embodiment, the extension has one rigid hook 2c and two above mentioned units comprising the flexible hook 2a, the hook clamp 2b and the screw 3, in the previously described arrangement. This one rigid hook 2c and two units are arranged arranged circumferentially in the lower body 2 of the extension, as shown in Figs. 1-4 and 7a.

Preferably, the hooking unit (or: both, many or all the hooking units, if there are more) is arranged in a recess in the lower body 2 of the extension.

Preferably, the screw 3 (or: both, many or all the screws 3, if there are more) is covered, from above, with a cap 4 which acts as a seal - preventing unscrewing of the screws 3 and disassembly of the extension according to the invention by unauthorized persons.

The extension has an electronic teletransmission system installed in a place designed therefor on the upper body 1. In particular, this system, in the presented embodiment, is a system for wireless data transmission and has an antenna 5, a battery 6 and a PCB 7 with appropriately configured and programmed electronic components. However, without detriment to the the essence of the present invention, another system can be installed, in particular a system for wireless data transmission.

In the presented embodiment, the extension according to the invention is made of copolymer of acrylonitrile-butadiene-styrene (ABS). Alternatively, other materials can be used - polyamide (PA) or polycarbonate (PC).

## Claims

1. An extension for water meter, comprising an upper body (1)
with a place reserved for an electronic teletransmission system and a lower body (2) having its shape adapted to the upper part of the water meter housing, equipped with a mounting means (2a, 2b, 2c, 3) for mounting the extension to the water meter (10), **characterised in that** the mounting means include at least one rigid hook (2c) and at least one hooking unit comprising a flexible hook (2a), a hook clamp (2b) and a screw (3) positioned relative to each other so that, after placing the extension on the water meter (10), the flexible hook (2a) falls into a hooking window (10a) of the water meter (10), and is blocked in this position by the hook clamp (2b) tightened with the screw (3).

2. The extension according to claim 1, **characterised in that** it comprises exactly one rigid hook (2c) and exactly two hooking units, referred to in claim 1, arranged circumferentially in the lower body (2) of the extension.

3. The extension according to claim 1 or 2, **characterised in that** the hooking unit, referred to in claim 1, as seen from inside in the radial direction outwards, comprises, in order:
a. the flexible hook (2a), located closest to the centre of the extension, mounted with its one end to the lower body (2) and extending from that place downwards, i.e. towards the water meter (10), and equipped with the latch, located below this place, preferably at the opposite end of the flexible hook (2a),
b. the hook clamp (2b), located further from the centre of the extension than the flexible hook (2a), mounted with its one end to the lower body (2) and extending from that place downwards, i.e. towards the water meter (10), and equipped with a projection directed towards the flexible hook (2a), located below this place, preferably at the opposite end of the hook clamp (2b),
c. a hole for the screw (3), located further from the centre of the extension than the hook clamp (2b), extending substantially in parallel to the hook clamp (2b), having location and dimensions selected so that, after placing the extension on the water meter (10) and screwing the screw (3) into this hole - the screw (3) pushes the hooking unit and, through the projection of the hook clamp (2b), it presses the clamp of the flexible hook (2a), thereby stabilising the clamp of the flexible hook (2a) in the hooking window (10a) of the water meter (10).

4. The extension according to claim 1, 2 or 3, **characterised in that** the hooking unit, referred to in claim 1, is placed in a recess in the lower body (2) of the extension.

5. The extension according to any one of the preceding claims 1 to 4, **characterised in that** the screw (3) is covered with a cap (4) from above.

6. The extension according to any one of the preceding claims 1 to 5, **characterised in that** it further includes an electronic teletransmission system, arranged in a place reserved therefor on the upper body.

7. The extension according to claim 6, **characterised in that** the electronic teletransmission system includes an antenna (5), a battery (6) and a PCB (7) with appropriately configured and programmed electronic components.

8. The extension according to any one of the preceding claims 1 to 7, **characterised in that** it is made of a plastic material, preferably copolymer of acrylonitrile-butadiene-styrene (ABS), polyamide (PA) or polycarbonate (PC).

## Patentansprüche

1. Wasserzählerverlängerung, aufweisend einen oben Körper (1)
mit einer Stelle reserviert für ein elektronisches Datenübertragungssystem und einen unteren Körper (2) mit seiner Form angepasst an den oberen Teil des Wasserzählergehäuses, ausgestattet mit Montagemittel (2a, 2b, 2c, 3) zur Montage der Verlängerung des Wasserzählers (10), **gekennzeichnet dadurch, dass**
die Montagemittel mindestens einen festen Haken (2c) und mindestens eine Hakeneinheit aufweisend einen elastischen Haken (2a), eine Hakenklemme (2b) und eine Schraube (3) aufweist, die gegeneinander so angeordnet sind, dass nach dem Anbringen der Verlängerung am Wasserzähler (10) der elastische Haken (2a) in die Hakenaufnahme (10a) des Wasserzählers (10) trifft, und in dieser Position mit der durch die Schraube (3) fixierte Hakenklemme (2b) blockiert wird.

2. Verlängerung nach Anspruch 1, **gekennzeichnet dadurch, dass** es genau einen festen Haken (2c) und genau zwei Hakeneinheiten nach Anspruch 1 aufweist, die umfänglich im unteren Körper (2) der Verlängerung angeordnet sind.

3. Verlängerung nach Anspruch 1 oder 2, **gekennzeichnet dadurch, dass** die Hakeneinheit nach Anspruch 1, von der Innenseite in radialer Richtung nach außen gesehen in folgender Reihenfolge aufweist:
a. einen elastischen Haken (2a), angeordnet am nächsten zur Mitte der Verlängerung, und mit einem Ende am unteren Körper (2) montiert, und von dieser Stelle nach unten reichend, z.B. zum Wasserzähler (10), und ausgestattet mit Schieber, der unter dieser Stelle, und vorzugsweise am gegenüberliegenden Ende des elastischen Hakens (2a) angeordnet ist,
b. eine Hakenklemme (2b), angeordnet weiter von der Mitte der Verlängerung als der elastische Haken (2a), montiert mit einem Ende am unteren Körper (2) und von dieser Stelle nach unten reichend, z.B. zum Wasserzähler (10), und ausgestattet mit einem zum elastischen Haken (2a) gerichteten Vorsprung, der unter dieser Stelle, und vorzugsweise am gegenüberliegenden Ende der Hakenklemme (2b) angeordnet ist,
c. eine Öffnung für die Schraube (3), weiter von der Mitte der Verlängerung als die Hakenklemme (2b) angeordnet, und wesentlich parallel zur Hakenklemme (2b) erstreckend, und deren Anordnung und Abmessungen derart gewählt sind, und nach dem Platzieren der der Verlängerung am Wasserzähler (10) und Eindrehen der Schraube (3) in diese Öffnung - die Schraube (3) die Hakeneinheit drückt und mittels des Vorsprungs der Hakenklemme (2b), die Klemme des elastischen Hakens (2a) drückt, und somit die Klemme des elastischen Hakens (2a) im Hakenfenster (10a) des Wasserzählers stabilisiert (10).

4. Verlängerung nach Anspruch 1, 2 oder 3, **gekennzeichnet dadurch, dass** die Hakeneinheit, nach Anspruch 1, in einer Aussparung im unteren Körper (2) der Verlängerung angeordnet ist.

5. Verlängerung nach einem der vorstehenden Ansprüche von 1 bis 4, **gekennzeichnet dadurch, dass** die Schraube (3) mit einer Kappe (4) von oben abgedeckt ist.

6. Verlängerung nach einem der vorstehenden Ansprüche von 1 bis 5, **gekennzeichnet dadurch, dass** sie außerdem ein elektronisches Datenübertragungssystem aufweist, das an einer dafür bestimmten Stelle im oberen Körper angeordnet ist.

7. Verlängerung nach Anspruch 6, **gekennzeichnet dadurch, dass** das elektronische Datenübertragungssystem eine Antenne (5), eine Batterie (6) und eine Leiterplatte (7) mit entsprechend konfigurierten und programmierten Elektronikkomponenten.

8. Verlängerung nach einem der vorstehenden Ansprüche von 1 bis 7, **gekennzeichnet dadurch, dass** sie aus einem plastischen Werkstoff besteht vorzugsweise aus Acrylnitril-Butadien-Styrol-Copolimer (ABS), Polyamid (PA) oder Polycarbonat (PC).

## Revendications

1. Une extension pour le compteur d'eau, comprenant un corps supérieur (1)
avec un endroit réservé à un système de télétransmission électronique et un corps inférieur (2) ayant sa forme adaptée à la partie supérieure du boîtier du compteur d'eau, équipée de moyens de montage (2a, 2b, 2c, 3) pour monter l'extension au compteur d'eau (10), **caractérisée en ce que**
les moyens de montage comprennent au moins un crochet rigide (2c) et au moins une unité d'accrochage comprenant un crochet flexible (2a), une pince à crochet (2b) et une vis (3) positionnés l'un par rapport à l'autre de sorte qu'après avoir placé l'extension sur le compteur d'eau (10), le crochet flexible (2a) tombe dans une fenêtre d'accrochage (10a) du compteur d'eau (10), et est bloqué dans cette position par la pince à crochet (2b) serrée avec la vis (3).

2. L'extension selon la revendication 1, **caractérisée en ce qu**'elle comprend exactement un crochet rigide (2c) et exactement deux unités d'accrochage, mentionnés dans la revendication 1, disposés circonférentiellement dans le corps inférieur (2) de l'extension.

3. L'extension selon la revendication 1 ou 2, **caractérisée en ce que** l'unité d'accrochage, mentionnée dans la revendication 1, comme vue de l'intérieur dans la direction radiale vers l'extérieur, comprend successivement :
a. le crochet flexible (2a), situé le plus près du centre de l'extension, monté avec une de ses extrémités au corps inférieur (2) et s'étendant de cet endroit vers le bas, c.-à-d. vers le compteur d'eau (10), et équipé d'un loquet, situé au-dessous de cet endroit, de préférence à l'extrémité opposée du crochet flexible (2a),
b. la pince à crochet (2a), située plus loin du centre de l'extension que le crochet flexible (2a), montée avec une de ses extrémités au corps inférieur (2) et s'étendant de cet endroit vers le bas, c.-à-d. vers le compteur d'eau (10), et équipée d'une saillie dirigée vers le crochet flexible (2a), située au-dessous de cet endroit, de préférence à l'extrémité opposée de la pince à crochet (2b),
c. un trou pour la vis (3), situé plus loin du centre de l'extension que la pince à crochet (2b), s'étendant sensiblement parallèlement à la pince à crochet (2b), ayant la position et les dimensions sélectionnées de sorte qu'après avoir placé l'extension sur le compteur d'eau (10) et vissé la vis (3) dans ce trou - la vis (3) pousse l'unité d'accrochage et, par la projection de la pince à crochet (2b), elle appuie la pince du crochet flexible (2a), stabilisant ainsi la pince du crochet flexible (2a) dans la fenêtre d'accrochage (10a) du compteur d'eau (10).

4. L'extension selon la revendication 1, 2 ou 3, **caractérisée en ce que** l'unité d'accrochage, mentionnée dans la revendication 1, est placée dans un évidement dans le corps inférieur (2) de l'extension.

5. L'extension selon l'une quelconque des revendications précédentes 1 à 4, **caractérisée en ce que** la vis (3) est recouverte d'un bouchon (4) par le dessus.

6. L'extension selon l'une quelconque des revendications précédentes 1 à 5, **caractérisée en ce qu**'elle comprend en outre un système de télétransmission électronique, disposé dans un endroit réservé à cet effet sur le corps supérieur.

7. L'extension selon la revendication 6, **caractérisée en ce que** le système de télétransmission électronique comprend une antenne (5), une batterie (6) et un circuit imprimé (7) avec des éléments électroniques configurés et programmés de manière appropriée.

8. L'extension selon l'une quelconque des revendications précédentes 1 à 7, **caractérisée en ce qu**'elle est réalisée en une matière plastique, de préférence en copolymère d'acrylonitrile-butadiène-styrène (ABS), en polyamide (PA) ou en polycarbonate (PC).
